# EUROPEAN PATENT SPECIFICATION

(11) **EP 4 645 746 B1**
(45) Date of publication and mention of the grant of the patent: **26.08.2026**
(21) Application number: 25173021.4
(22) Date of filing: 28.04.2025
(51) Int. Cl.: H04L 9/00, H04L 9/30

(54) **ELECTRONIC DEVICE AND CONTROLLING METHOD THEREOF**
ELEKTRONISCHES GERÄT UND VERFAHREN ZU SEINER STEUERUNG
DISPOSITIF ÉLECTRONIQUE ET PROCÉDÉ DE COMMANDE ASSOCIÉ

(30) Priority: 29.04.2024 KR 20240057183; 24.05.2024 KR 20240067568; 23.09.2024 KR 20240128046; 23.04.2025 KR 20250053190
(43) Date of publication of application: 05.11.2025
(73) Proprietor: CRYPTO LAB INC., Gwanak-gu, Seoul 08826 (KR)
(72) Inventor: Bae, Youngjin, 08787 Seoul (KR); Kim, Jaehyung, Stanford, 94305 (US); Suvanto, Elias, 08826 Seoul (KR); Stehle, Damien, 08826 Seoul (KR)
(74) Representative: Dragotti & Associati S.P.A.

(56) References cited:
- "Advances in Databases and Information Systems", vol. 11477, 28 October 2018, SPRINGER INTERNATIONAL PUBLISHING, Cham, ISBN: 978-3-319-10403-4, article HAO CHEN ET AL: "Improved Bootstrapping for Approximate Homomorphic Encryption : 38th Annual International Conference on the Theory and Applications of Cryptographic Techniques, Darmstadt, Germany, May 19-23, 2019, Proceedings, Part II", pages: 34 - 54, XP055598780, 032682, DOI: 10.1007/978-3-030-17656-3_2
- JOON-WOO LEE ET AL: "High-Precision Bootstrapping of RNS-CKKS Homomorphic Encryption Using Optimal Minimax Polynomial Approximation and Inverse Sine Function", vol. 20210306:130647, 6 March 2021 (2021-03-06), pages 1 - 42, XP061052702, Retrieved from the Internet <URL:https://eprint.iacr.org/2020/552.pdf> [retrieved on 20210306]

## Description

### [Technical Field]

The disclosure relates to an electronic device and a controlling method of the electronic device, and more particularly to an electronic device which is capable of performing bootstrapping and encryption computation, and a controlling method thereof.

### [Background Art] .

Homomorphic encryption may be an encryption scheme with which an addition and multiplication operation can be performed in a ciphertext state, which makes operations possible without decoding sensitive data, and is receiving attention from various fields such as machine learning, statistical analysis, finance, and health care in which protection of privacy is required.

In an example, a Cheon-Kim-Kim-Song (CKKS) scheme may be an approximate homomorphic encryption scheme designed to approximately process real numbers and complex data, and may be suitable for a continuous function or a real number-based application which require much vector calculations. However, the CKKS scheme may have a limitation of noise being accumulated as operations are repeated, and decoding not being possible as a scale within the ciphertext collapses. To solve the above, the noise accumulated in the ciphertext may be removed, or a bootstrapping process for restoring a size of a modulus may be performed, and accordingly, the noise may be removed and the ciphertext may be re-encrypted without decoding the ciphertext.

However, a bootstrapping technique according to related art may have a limitation of operations being quite complex and errors being significant for maintaining a fixed point scale and needing a complex decoding polynomial approximation when directly handling the inputting real numbers or complex numbers.

In addition, in terms of related art, limitations such as a polynomial degree for function approximation being high and overall bootstrapping time becoming longer due to number of operations increasing, errors being accumulated in a modulus decreasing and scale adjusting process and a decoding failure probability increasing, and a high throughput or a bit unit processing being inefficient due to parallelizing and vectorizing being limited have been pointed out.

### [Disclosure]

### [Technical Solution]

Aspects according to the disclosure are provided to solve at least the above-described problems, and to provide an electronic device capable of performing efficient and effective bootstrapping and encryption operations and a controlling method thereof.

Additional aspects will be described in part in the description below, and parts thereof will be obvious from the description, or learned by practice of the embodiments provided.

According to an aspect of the disclosure, an electronic device includes at least one memory storing instructions, and at least one processor including a processing circuit, and the instructions, when executed individually or collectively by the at least one processor, cause the electronic device to perform bootstrapping for an input ciphertext encrypted with integer data, and obtain an intermediate ciphertext by transforming the integer data to complex root of unity data, obtain, based on the intermediate ciphertext, a polynomial for approximating a pre-defined function in a complex root of unity, and obtain, by inputting the complex root of unity data in the polynomial to approximately perform an operation corresponding to the function in a ciphertext state, an output ciphertext including a function value corresponding to the integer data.

The input ciphertext, the intermediate ciphertext, and the output ciphertext may be encrypted based on a homomorphic encryption scheme for approximately performing an addition and multiplication operation while real data and complex data are encrypted.

The instructions, when executed individually or collectively by the at least one processor, cause the electronic device to transform values of slots expressed as a complex vector included in the input ciphertext to coefficient data indicating a coefficient of the polynomial, raise a modulus of the coefficient data, transform the modulus raised coefficient data to the complex vector, and transform the integer data to the complex root of unity data by performing an operation according to an approximate polynomial in the ciphertext state by using the complex vector as an input of the approximate polynomial of an exponential function.

The instructions, when executed individually or collectively by the at least one processor, cause the electronic device to obtain the output ciphertext by performing an operation for each term of the polynomial in the ciphertext state by using the complex root of unity data comprised in the intermediate ciphertext as an input of the polynomial.

The instructions, when executed individually or collectively by the at least one processor, cause the electronic device to perform a conjugate complex operation based on the complex root of unity data, and reduce a degree of the polynomial by omitting mutually removable terms according to a symmetrical characteristic of a conjugate complex from among the terms of the polynomial.

The instructions, when executed individually or collectively by the at least one processor, cause the electronic device to reduce, based on the output ciphertext being obtained, errors of the output ciphertext by correcting the function value in the ciphertext state to converge to one function value from among 0 or 1 using the function value included in the output ciphertext as an input of a pre-defined refinement polynomial.

The instructions, when executed individually or collectively by the at least one processor, cause the electronic device to obtain the polynomial in which the function value and a derivative value for the function value simultaneously match with the function using the complex root of unity data included in the intermediate ciphertext as an input.

The instructions, when executed individually or collectively by the at least one processor, cause the electronic device to divide the polynomial into a plurality of lower degree terms and a plurality of high-order terms by using the complex root of unity data included in the intermediate ciphertext as an input, and obtain the output ciphertext including the function value by multiplying an operation result for the high-order terms after accumulating operation results for the lower degree terms.

The input ciphertext may include a plurality of input ciphertexts, and the instructions, when executed individually or collectively by the at least one processor, cause the electronic device to obtain in parallel a plurality of intermediate ciphertexts corresponding respectively to the plurality of input ciphertexts by transforming the integer data included in each of the plurality of input ciphertexts to the complex root of unity data, obtain a plurality of polynomials corresponding respectively to the plurality of intermediate ciphertexts, and obtain a plurality of output ciphertexts corresponding respectively to the plurality of intermediate ciphertexts by applying the plurality of polynomials to the plurality of intermediate ciphertexts.

The instructions, when executed individually or collectively by the at least one processor, cause the electronic device to obtain the input ciphertext including the integer data by packing data expressed in bit units into integer units, and obtain result values corresponding respectively to a plurality of bits by decomposing the function value included in the output ciphertext into the bit units.

The input ciphertext consists of vectors including integer data in each of a plurality of slots, and the instructions, when executed individually or collectively by the at least one processor, cause the electronic device to transform the integer data included in each of the plurality of slots to the complex root of unity data respectively, and obtain, by applying the polynomial to each of the complex root of unity data, the output ciphertext including all of a plurality of output data including function values corresponding respectively to the plurality of slots.

The instructions, when executed individually or collectively by the at least one processor, cause the electronic device to adjust, based on a predetermined threshold value indicating an expression range of the integer data, an encryption parameter and a degree of the polynomial used in the bootstrapping.

According to an aspect of the disclosure, a controlling method of an electronic device includes performing bootstrapping for an input ciphertext encrypted with integer data, and obtaining an intermediate ciphertext by transforming the integer data to complex root of unity data, obtaining, based on the intermediate ciphertext, a polynomial for approximating a pre-defined function in a complex root of unity, and obtaining, by inputting the complex root of unity data in the polynomial to approximately perform an operation corresponding to the function in a ciphertext state, an output ciphertext including a function value corresponding to the integer data.

According to an aspect of the disclosure, in terms of a non-transitory computer-readable recording medium including a program for executing a controlling method of an electronic device, the controlling method of the electronic device including performing bootstrapping for an input ciphertext encrypted with integer data, and obtaining an intermediate ciphertext by transforming the integer data to complex root of unity data, obtaining, based on the intermediate ciphertext, a polynomial for approximating a pre-defined function in a complex root of unity, and obtaining, by inputting the complex root of unity data in the polynomial to approximately perform an operation corresponding to the function in a ciphertext state, an output ciphertext including a function value corresponding to the integer data.

### [Description of Drawings]

Aspects above and other aspects, features, and advantages according to the disclosure will be made clearer from the following detailed description taken in together with the accompanying drawings.
FIG. 1 is a block diagram illustrating in brief configurations of an electronic device according to an embodiment of the disclosure;
FIG. 2 is a block diagram illustrating in brief modules according to an embodiment of the disclosure;
FIG. 3 is a diagram illustrating processing steps of a ciphertext according to an embodiment of the disclosure;
FIG. 4 is a diagram illustrating one or more embodiments associated with a parallel processing module of the disclosure; and
FIG. 5 is a flowchart indicating a controlling method of an electronic device according to an embodiment of the disclosure.

### [Mode for Invention]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents or alternatives of the embodiments included in the ideas and the technical scopes disclosed herein. With respect to the description of the drawings, like reference numerals may be used to indicate like elements.

Terms used in the disclosure have been merely used to describe a specific embodiment, and is not intended to limit the scope of protection. A singular expression includes a plural expression, unless otherwise specified.

In the disclosure, expressions such as "have", "may have", "include", and "may include" are used to designate a presence of a corresponding characteristic (e.g., elements such as numerical value, function, operation, or component), and not to preclude a presence or a possibility of additional characteristics.

In the disclosure, expressions such as "A or B", "at least one of A and/or B", or "one or more of A and/or B" may include all possible combinations of the items listed together. For example, "A or B", "at least one of A and B", or "at least one of A or B" may refer to all cases including (1) at least one A, (2) at least one B, or (3) both of at least one A and at least one B.

Expressions such as "1st", "2nd", "first", or "second" used in the disclosure may limit various elements regardless of order and/or importance, and may be used merely to distinguish one element from another element and not limit the relevant element.

When a certain element (e.g., a first element) is indicated as being "(operatively or communicatively) coupled with/to" or "connected to" another element (e.g., a second element), it may be understood as the certain element being directly coupled with/to the another element or as being coupled through other element (e.g., a third element).

Conversely, when a certain element (e.g., first element) is indicated as "directly coupled with/to" or "directly connected to" another element (e.g., second element), it may be understood as the other element (e.g., third element) not being present between the certain element and the another element.

The expression "configured to... (or set up to)" used in the disclosure may be used interchangeably with, for example, "suitable for...", "having the capacity to...", "designed to...", "adapted to...", "made to...", or "capable of..." based on circumstance. The term "configured to... (or set up to)" may not necessarily mean "specifically designed to" in terms of hardware.

Rather, in a certain circumstance, the expression "a device configured to..." may mean something that the device "may perform..." together with another device or components. For example, a phrase "a sub-processor configured to (or set up to) perform A, B, or C" may mean a dedicated processor for performing a relevant operation (e.g., an embedded processor), or a generic-purpose processor (e.g., a central processing unit (CPU) or an application processor) capable of performing the relevant operations by executing one or more software programs stored in a memory device.

The term 'module' or 'part' used in the embodiments herein perform at least one function or operation, and may be implemented with hardware or software, or implemented with a combination of hardware and software. In addition, a plurality of 'modules' or a plurality of 'parts', except for a 'module' or a 'part' which needs to be implemented with a specific hardware, may be integrated in at least one module and implemented as at least one processor.

Meanwhile, various elements and areas of the drawings have been schematically illustrated.

Embodiments of the disclosure will be described in detail below with reference to the accompanying drawings to aid in the understanding of those of ordinary skill in the art.

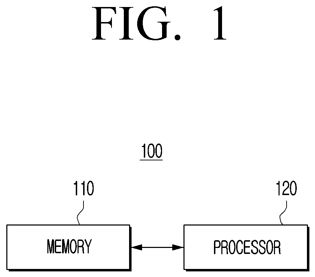

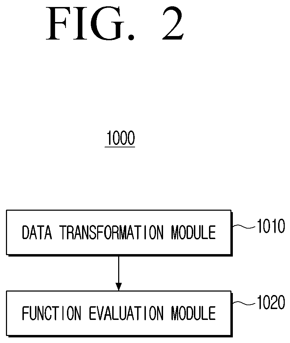

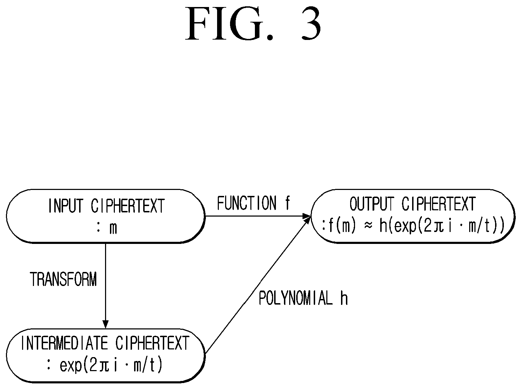

FIG. 1 is a block diagram illustrating in brief configurations of an electronic device 100 according to an embodiment of the disclosure. FIG. 2 is a block diagram illustrating in brief modules according to an embodiment of the disclosure. Further, FIG. 3 is a diagram illustrating processing steps of a ciphertext according to an embodiment of the disclosure. Embodiments of the disclosure will be described below with reference to FIG. 1, FIG. 2, and FIG. 3 together therewith.

As shown in FIG. 1, the electronic device 100 may include a memory 110 and a processor 120. However, the configurations as shown in FIG. 1 are merely examples, and when implementing the disclosure, new configurations may be added or a portion of the configuration may be omitted in addition to the configurations as shown in FIG. 1. For example, the electronic device 100 may further include a communication interface (e.g., WiFi module, a Bluetooth module, a wireless communication module, a NFC module, an Ultra-Wide Band (UWB) module, etc.) capable of performing communication with external devices, an input interface (e.g., microphone, a touch screen, etc.) for receiving a user input, an output interface (e.g., a display, a speaker, etc.) for outputting various information, and the like.

The memory 110 may be stored with at least one instruction with respect to the electronic device 100. Further, the memory 110 may be stored with an operating system (O/S) for driving the electronic device 100. In addition, the memory 110 may be stored with various software programs or applications for the electronic device 100 to operate according to various embodiments of the disclosure. Further, the memory 110 may include a semiconductor memory such as a flash memory, a magnetic storage medium such as a hard disk, or the like.

Specifically, the memory 110 may be stored with various software modules for the electronic device 100 to operate according to the various embodiments of the disclosure, and the processor 120 may control an operation of the electronic device 100 by executing various software modules stored in the memory 110. That is, the memory 110 may be accessed by the processor 120, and reading, writing, modifying, deleting, updating, and the like of data may be performed by the processor 120.

Meanwhile, the term 'memory 110' in the disclosure may be used as a meaning that includes the memory 110, a ROM within the processor 120, a RAM, or a memory card (e.g., a micro SD card, a memory stick) mounted to the electronic device 100.

According to an embodiment, in the memory 110, an input ciphertext, an intermediate ciphertext, an output ciphertext, information on a polynomial, information on an encryption scheme (e.g., CKKS), and the like according to the disclosure may be stored. In the memory 110, various algorithms (e.g., an algorithm for IntBootRoot, an algorithm for function analysis, etc.) for performing an operation according to the disclosure may be stored. In addition thereto, various information necessary within an extent for achieving an object of the disclosure may be stored in the memory 110, and the information stored in the memory 110 may be received from an external device or updated according to being input by a user.

The processor 120 may control the overall operation of the electronic device 100. Specifically, the processor 120 may be connected with configurations of the electronic device 100 including the memory 110. The processor 120 may include a processing circuit, and may be implemented as at least one processor 120. That is, the processor 120 may be implemented as one or more processors 120. The processor 120 may control, by individually or collectively executing instructions stored in the memory 110, an operation of the electronic device 100.

The processor 120 may be implemented with various schemes. For example, the processor 120 may be implemented as at least one from among an application specific integrated circuit (ASIC), an embedded processor, a microprocessor, a hardware control logic, a hardware finite state machine (FSM), and a digital signal processor (DSP). Meanwhile, the term 'processor 120' in the disclosure may be used as a meaning which includes a central processing unit (CPU), a graphic processing unit (GPU), a main processing unit (MPU), and the like.

According to an embodiment, the processor 120 may obtain the output ciphertext by performing a function evaluation after transforming integer data together with bootstrapping for the input ciphertext to a complex root of unity data.

Specifically, the processor 120 may implement, as shown in FIG. 2, various embodiments according to the disclosure using a plurality of modules 1000 that include a data transformation module 1010 and a function evaluation module 1020. The plurality of modules 1000 may be implemented as a software module or a hardware module, and a portion from among the plurality of modules 1000 may be implemented as a neural network model. Two or more modules from among the plurality of modules 1000 may be implemented as one integrated module. Various embodiments which the processor 120 can implement through the plurality of modules 1000 will be described below.

The 'ciphertext' according to the disclosure may be refer to a result of having encrypted a plaintext according to a homomorphic encryption scheme. The ciphertext according to the disclosure may include the input ciphertext, the intermediate ciphertext, the output ciphertext, and the like which will be described below, and the ciphertexts may indicate results which were encrypted with the same homomorphic encryption scheme.

According to an embodiment, the input ciphertext, the intermediate ciphertext, and the output ciphertext may be encrypted based on the homomorphic encryption scheme for approximately performing an addition and multiplication operation while real data and complex data are encrypted. That is, the ciphertexts according to the disclosure may include a 'Cheong-Kim-Kim-Song (CKKS) encryption' scheme which is a homomorphic encryption scheme for a complex approximation operation. However, the ciphertext according to the disclosure is not limited to the CKKS ciphertext, and may be applied to other homomorphic encryption schemes.

The processor 120 may perform bootstrapping for the integer data encrypted input ciphertext, and obtain the intermediate ciphertext by transforming the integer data to the complex root of unity data. The bootstrapping according to the disclosure may be bootstrapping including an operation for transforming an integer encoded ciphertext to a root of unity encoded ciphertext, and may be referred to as 'Integer-to-Root Bootstrapping (IntRootBoot)'. The operation as described above may be performed through the data transformation module 1010.

The 'bootstrapping' may refer to an operation of removing noise accumulated in the ciphertext, or restoring a size of a modulus. In addition, the bootstrapping may remove noise that is accumulated as operations are repeated in the homomorphic encryption scheme, and may be referred to as a scheme for restoring the ciphertext back to an operable state.

The bootstrapping may be for restoring a multiplication depth. The multiplication depth may indicate how many times the multiplication operation can be repeatedly performed in the homomorphic encryption, that is, a depth of ciphertext with which the multiplication operation can be performed, and typically, noise that is accumulated in the ciphertext may be increased as the multiplication operation performed several times. Furthermore, when noise of a certain level or more is accumulated, a more accurate calculation may not be possible. Bootstrapping allows for continuous multiplication operations within the ciphertext to be possible, and may mean a process of guaranteeing accuracy in operation by removing noise which can be generated in an operation and restoring.

Based on the CKKS encryption scheme according to the disclosure, because the addition and multiplication operation is repeatedly performed while data in a real number or complex number form is approximately encrypted, noise may be accumulated as the operation for the input ciphertext is repeated, and a decoding error may occur as accuracy of a scale set in the input ciphertext is decreased. Accordingly, the processor 120 may restore the ciphertext back to its initial state by performing bootstrapping of approximately performing decoding and re-encryption in a ciphertext state.

In addition, with CKKS, an encryption operation may be performed based on a specific modulus which is a parameter limiting the operation result to a specific range, and the modulus may gradually decrease as the operation progresses. Accordingly, the processor 120 may restore the decreased modulus by performing a modulus raising operation from among the bootstrapping process, and maintain operation accuracy and security parameters accordingly thereto.

The 'input ciphertext' may refer to a result of integer data being encrypted. Specifically, the input ciphertext may approximate real and complex data into integer data based on a secret key and a predetermined modulus, and include a result of having encrypted integer data. In FIG. 3, the integer data included in the input ciphertext may be represented as m.

According to an embodiment, the integer data may refer to data including integer number of less than or equal to a predetermined threshold value. For example, the integer data may be a set of integer numbers of less than or equal to a threshold value such as integer numbers that are smaller than 7. Meanwhile, the integer data may be data generated by packing bit unit data into integer units.

The 'complex root of unity data' may be an intermediate result obtained in a process of the bootstrapping the integer data encrypted input ciphertext, may refer to data consisting of complex number values that are positioned at a circle of unity on a complex plane. As shown in FIG. 3, the complex root of unity may be expressed in an exp(2πim/t) form, and here, e may be a natural constant, i may be an imaginary unit, m may be an integer value included in the integer data, and t may refer to a natural number indicating a complex period.

The processor 120 may obtain, in the process of performing bootstrapping, the intermediate ciphertext by transforming the integer data included in the input ciphertext to the complex root of unity data. Specifically, the processor 120 may transform, while performing bootstrapping, data on an integer domain to a position in a vicinity of the circle of unity on a complex domain. The complex values transformed at this time may be approximates of values having a form of the complex root of unity on the circle of unity. A detailed operation of the IntRootBoot will be divided into four types and described in detail below.

Firstly, the processor 120 may transform values of slots expressed as the complex vector included in the input ciphertext to coefficient data representing a polynomial coefficient. This process may be referred to as a 'Slot-to-Coefficient (S2C) operation' in that the ciphertext encoded with data in the slot is transformed with a coefficient encoding scheme, and specifically, may be performed as described below.

Specifically, the input ciphertext may be encoded in a form of a complex vector including a plurality of slots, and each slot may include a value of having encrypted the integer data. The processor 120 may interpret the complex vector, and perform a transformation operation which corresponds values included in each slot to a pre-defined polynomial coefficient. That is, each of the integer data positioned at the slots may be extracted as coefficient data to be utilized in a polynomial operation.

Secondly, the processor 120 may raise the modulus of coefficient data. This process may be referred to as a 'modulus raising (ModRaise) operation', and specifically, may be performed as described below.

Specifically, the coefficient data may be initially expressed as a relatively small modulus, but in order to perform a high-order polynomial operation necessary in function approximation, there is a need to raise a modulus size. Accordingly, the processor 120 may raise the modulus for the coefficient data to express the coefficient data in a larger modulus area. Accordingly, loss in precision which can be generated during a function approximation operation thereafter may be prevented.

Thirdly, the processor 120 may transform modulus raised coefficient data to the complex vector. This process may be referred to as a 'coefficient-to-slot (C2S) operation' in that the data encoded ciphertext in the coefficient is transformed to a slot encoding scheme, and specifically, may be performed as described below.

Specifically, the function evaluation may be performed in a space of the complex root of unity when the coefficient data completed with modulus raising is reconstructed back to the complex vector form in the ciphertext. Accordingly, the processor 120 may encode the modulus expanded coefficient data back to the complex vector form, and arrange the complex values appropriately in each slot in the ciphertext.

Fourthly, the processor 120 may transform the integer data to the complex root of unity data by performing an operation according to an approximate polynomial in the ciphertext state by using the complex vector as input of the approximate polynomial of an exponential function. This process may be referred to as an 'Evaluate Exponential Function (EvalExp) operation' in that it is a polynomial evaluation operation that approximates the exponential function, and specifically, may be performed as described below.

Specifically, the processor 120 may use the complex vector as an input value of the approximate polynomial defined with the exponential function, a decoding function, and the like, and obtain the complex root of unity data corresponding to the integer data by performing an operation for each polynomial term in the ciphertext state. The above may have an effect of rotating the input value in the space of the complex root of unity through an approximation of the exponential function. The complex root of unity data may be stored as the intermediate ciphertext. For example, a combination of ApproxCos polynomial and ApproxSin polynomial may be used as the approximate polynomial, but is not limited thereto.

According to an embodiment, the input ciphertext may be formed with vectors including integer data in each of the plurality of slots. The processor 120 may transform the integer data included in each of the plurality of slots to the complex root of unity data respectively. Then, the processor 120 may obtain, by applying the polynomial to each of the complex root of unity data, the output ciphertext including all of a plurality of output data including function values corresponding respectively to the plurality of slots.

Specifically, the processor 120 may process, based on the input ciphertext being formed in a vector form having a plurality of slots, the integer data included in each slot individually. To this end, the processor 120 may transform the integer data of each slot to the complex root of unity data, and generate a function approximation result for individual slot units by applying the polynomial that is the same or specialized for each slot for each of the relevant complex root of unity data. This operation result may be output values corresponding to each of the plurality of slots, and may be processed in parallel in a single ciphertext utilizing a Single Instruction, Multiple Data (SIMD) structure. Accordingly, the processor 120 may significantly improve the overall calculation efficiency.

The processor 120 may obtain, based on the intermediate ciphertext, the polynomial for approximating a pre-defined function in the complex root of unity. Then, the processor 120 may obtain the output ciphertext including a function value corresponding to the integer data by inputting the complex root of unity data in the polynomial to approximately perform an operation corresponding to the function in the ciphertext state. The process as described above may be referred to as a 'function evaluation' process, and the operation as described above may be performed through the function evaluation module 1020 as described below.

Specifically, the processor 120 may analyze the complex root of unity data included in the intermediate ciphertext, and obtain the polynomial capable of approximating the pre-defined function on the complex plane based on an input range with which the complex root of unity data is mapped.

As shown in FIG. 3, the pre-defined function may be referred to as f, and the function may be, for example, the exponential function, ReLU, or the like. As shown in FIG. 3, the polynomial may be referred to as h. For example, the processor 120 may form the polynomial based on a Taylor series, a Chebyshev polynomial, a Hermite interpolation, or the like so as to approximate the function value within the range in which the complex root of unity data is included.

The processor 120 may obtain the output ciphertext by performing an operation for each term of the polynomial in the ciphertext state using the complex root of unity data included in the intermediate ciphertext as an input of the polynomial. Specifically, the processor 120 may calculate an approximation result of a function by repeatedly performing the multiplication and addition operation for each term of the polynomial based on the complex root of unity data, and obtain the output ciphertext formed for the calculated result to be included in the plurality of slots.

The processor 120 may calculate the function value corresponding to the integer data without decoding by approximately performing the polynomial evaluation as described above on the complex root of unity in the ciphertext state, and each slot in the output ciphertext may be included with the function approximation result. The 'output ciphertext' may refer to a final result in which the complex root of unity data corresponding to the transformed integer data is stored in an encrypted form. f(m)≈h(exp(2πi·m/t) in FIG. 3 may show a process of calculating the complex root of unity for the encrypted integer data m, and generating the output ciphertext by processing the value through an approximation function h(x).

According to an embodiment, the processor 120 may perform a conjugate complex operation based on the complex root of unity data. The processor 120 may reduce the degree of the polynomial by omitting mutually removable terms according to a symmetrical characteristic of a conjugate complex from among the terms of the polynomial.

Specifically, the processor 120 may analyze symmetrical properties present between the input value and the output value of the polynomial by utilizing a conjugate structure having the complex root of unity data. The processor 120 may identify that specific terms of the polynomial may offset each other or generate the same result according to a conjugate relationship, and reduce, by omitting the specific terms described, the degree of polynomial effectively. For example, the processor 120 may mutually remove a portion of the terms through the conjugate complex operation from the polynomial that approximates a sine function and a cosine function, a Lagrange interpolation polynomial, or the like, and the result value thereof may obtain a polynomial degree which may be the same or lower.

According to an embodiment, when the output ciphertext is obtained, the processor 120 may reduce errors of the output ciphertext by correcting the function value in the ciphertext state to converge to one function value from among 0 or 1 using the function value included in the output ciphertext as an input of a pre-defined refinement polynomial (or cleaning polynomial, pruning polynomial).

Specifically, the processor 120 may identify a term with a low level of contribution or vulnerable to noise for each term of the polynomial when forming the polynomial to be used in the function evaluation based on the complex root of unity data included in the intermediate ciphertext. The processor 120 may reduce to an operation degree of the whole polynomial by omitting a specific term, or reducing or setting to 0 a coefficient value of a relevant term according to an identification result. Accordingly, the processor 120 may decrease a level of complexity for the whole operation of bootstrapping by removing or simplifying an unnecessary term, and improve calculation accuracy in the ciphertext state.

According to an embodiment, the processor 120 may obtain the polynomial in which the function value and a derivative value for the function value simultaneously match with the function using the complex root of unity data included in the intermediate ciphertext as an input. Accordingly, the processor 120 may include an accurate function value in the output ciphertext by simultaneously performing the function evaluation with noise cleaning while carrying out an operation in the ciphertext.

Specifically, the processor 120 may obtain the polynomial capable of a more precise function approximation by taking into consideration not only the output value of the function, but also a gradient (differential value) of the derivative when using the complex root of unity data as the input value of the polynomial. For example, the processor 120 may set, based on the Hermite interpolation, the coefficient of the polynomial so that both the function value and the derivative value are matched at a point corresponding to each input value. The interpolation polynomial may secure the function approximation accuracy while reducing a number of high-order terms, and the processor 120 may obtain a precise output ciphertext without an increase in noise through the above.

According to an embodiment, the processor 120 may divide the polynomial into a plurality of lower degree terms and a plurality of high-order terms using the complex root of unity data included in the intermediate ciphertext as an input. Then, the processor 120 may obtain the output ciphertext including the function value by multiplying operation results for the high-order terms after accumulating the operation results for the lower degree terms.

Specifically, the processor 120 may divide the polynomial into lower degree terms and high-order terms when evaluating high-order polynomial necessary in function approximation by using the complex root of unity data as an input of the polynomial, and effectively calculate the above according to a Paterson-Stockmeyer algorithm. The processor 120 may distribute the calculations for the high-order terms into block units after first accumulating and storing the operation results for the lower degree terms, and perform an overall polynomial evaluation with a scheme that multiplies the above with the accumulated result. Accordingly, a number of multiplications necessary when performing the polynomial evaluation may be reduced, and a function value may be derived accurately and quickly within an error range that is fixed for the complex root of unity data.

In other words, the processor 120 may simultaneously apply the function evaluation steps according to the disclosure for several functions. In this case, the processor 120 may improve the overall throughput by evaluating a plurality of polynomials in parallel after performing IntRootBoot. Specifically, when using the Paterson-Stockmeyer algorithm, an initialization step and baby steps may be shared in several polynomials. Here, the initialization step may refer to a step of calculating basic values necessary in the polynomial in the Paterson-Stockmayer algorithm, and the baby step may refer to a step of obtaining the values in advance by calculating a portion of the terms of the polynomial in the Paterson-Stockmayer.

According to an embodiment, the processor 120 may adjust, based on a predetermined threshold value indicating an expression range of the integer data, an encryption parameter and a degree of the polynomial used in bootstrapping.

Specifically, the processor 120 may dynamically adjust the level of complexity of the encryption parameter and the polynomial approximation operation used in bootstrapping based on the maximum expression range of integer data included in the input ciphertext. More specifically, the processor 120 may select the precision (scale), the modulus size, the bootstrapping depth, and the degree of the polynomial for function approximation required in the ciphertext based on a quantitative threshold value such as a maximum value of an absolute value of the integer data or a bit length of the input data.

For example, if a range of the integer data is small, the processor 120 may reduce the whole amount of operation and shorten processing time by using a low degree polynomial and a small modulus parameter. Conversely, if the range of the integer is significant and precision is required, operation accuracy and a decoding success rate may be guaranteed using a higher degree polynomial and a larger encryption parameter. Accordingly, the processor 120 may select an optimized parameter according to a numerical characteristic of the input ciphertext.

A process including the IntRootBoot and the function evaluation as described above may be abbreviated as SI-BTS (Small Integer Bootstrapping). According to the various embodiments described above, the electronic device 100 may reduce the level of complexity in a ciphertext operation and improve the operation accuracy. Specifically, the electronic device 100 may secure numerical stability by encoding the integer with the root of unity of a complex plane, and significantly improve efficiency of the operation by simultaneously performing the function evaluation and the noise cleaning.

The various embodiment according to the disclosure may utilize executing an integer based circuit operation such as an Advanced Encryption Standard (AES) over a Fully Homomorphic Encryption (FHE). In addition, according to the disclosure, a large scale encryption data processing may be advantageously performed through parallel bootstrapping, a Look-Up-Table based function operation may be simultaneously performed with bootstrapping, and a high-speed operation may be performed with a lower latency than schemes such as DM/CGGI.

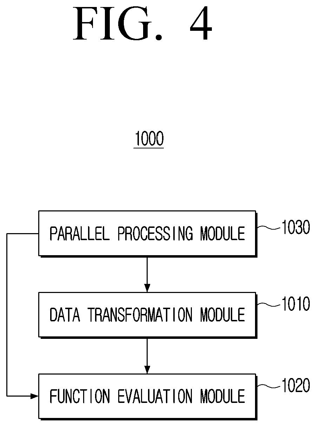

FIG. 4 is a diagram illustrating one or more embodiments associated with a parallel processing module 1030 of the disclosure.

As shown in FIG. 4, the plurality of modules 1000 according to the disclosure may further include not only the data transformation module 1010 and the function evaluation module 1020, but also a parallel processing module 1030. Various embodiments which the processor 120 can implement using the parallel processing module 1030 will be described below.

According to an embodiment, the input ciphertext may include a plurality of input ciphertexts. The processor 120 may obtain in parallel a plurality of intermediate ciphertexts corresponding respectively to the plurality of input ciphertexts by transforming the integer data included in each of the plurality of input ciphertexts to the complex root of unity data. The processor 120 may obtain the plurality of polynomials corresponding respectively to plurality of intermediate ciphertexts. Then, the processor 120 may obtain a plurality of output ciphertexts corresponding respectively to the plurality of intermediate ciphertexts by applying the plurality of polynomials to the plurality of intermediate ciphertexts.

Specifically, the processor 120 may analyze the integer data included in each of the plurality of input ciphertexts, and independently perform the bootstrapping according to the disclosure for each input ciphertext. To this end, the processor 120 may simultaneously obtain the plurality of intermediate ciphertexts corresponding to each input by performing in parallel steps such as CtoS, ModRaise, StoC, and EvalExp as described above for each of the input ciphertexts. In addition, the processor 120 may obtain each of the polynomials for function approximation corresponding to each of the plurality of intermediate ciphertexts, and generate in parallel the plurality of output ciphertexts corresponding to each input ciphertext by applying each of the polynomials to the intermediate ciphertext.

For example, the parallel processing structure as described above may be applied to not only the ciphertext of the CKKS scheme, but also to ciphertexts of the DM/CGGI scheme which is a bit or integer processing based homomorphic encryption scheme. Accordingly, the processor 120 may improve the overall throughput by simultaneously processing a plurality of messages of various encryption schemes.

The parallel bootstrapping for the DM/CGGI ciphertext will be described in detail. The processor 120 may simultaneously perform the function evaluation and bootstrapping by applying the bootstrapping and function evaluation according to the disclosure, that is, by applying SI-BTS after binding Learning With Errors (LWE) ciphertexts of the DM/CGGI scheme to one CKKS ciphertext with a ring packing technique.

Here, the LWE ciphertext may be referred to as a scheme that is processed in a form in which the encrypted data includes errors. This scheme provides security, but may be inefficiency in terms of operation. Conversely, the CKKS ciphertext may be an approximate homomorphic encryption scheme, and may effectively perform a real and complex operation in an encrypted state. This scheme may be used in advancement of encrypted data through operations such as bootstrapping.

First, the processor 120 may transform the LWE ciphertext to the CKKS ciphertext. Specifically, the processor 120 may pack several LWE ciphertexts into one CKKS ciphertext using a technique known as Ring Packing. This packed ciphertext may re-construct data to a form that corresponds to the CKKS scheme.

Next, the processor 120 may transform the integer encoded ciphertext to the root of unity encoded ciphertext using the IntRootBoot algorithm. The above may transform the integer encrypted data in a form of a root of unity, and have complex based operations performed in the ciphertext state.

Next, the processor 120 may perform parallel bootstrapping. The processor may transform the several LWE ciphertexts to the CKKS ciphertext, and simultaneously process the above. That is, the processor 120 may pack and process multiple ciphertexts to one ciphertext, and process the ciphertexts in parallel.

Next, the processor 120 may perform the function evaluation using the interpolation polynomial for the CKKS ciphertext, and simultaneously perform noise cleaning. The function evaluation may be performed in the encrypted state, and the processor 120 may directly obtain the calculated result in the ciphertext state through the above.

Finally, the processor 120 may finally extract the CKKS ciphertext back into the LWE ciphertext. At this time, through S2C (a process of transforming from a slot encoding to a coefficient encoding) and re-arrangement, a result may be finally restored in the LWE form, and the result thereof may be used.

According to an embodiment, the processor 120 may obtain the input ciphertext including integer data by packing data expressed in bit units to integer units. The processor 120 may obtain result values corresponding to each of the plurality of bits by decomposing the function value included in the output ciphertext to bit units. The above may be referred to as Batch Bits Bootstrapping (BB-BTS), and may include a process of packing k-number of bit ciphertexts in one integer and separating back into bit units after bootstrapping.

Specifically, the processor 120 may encode the plurality of bits into one integer and pack data into integer units when the input data is formed in bit units. The processor 120 may obtain the input ciphertext by encrypting the data packed into integer units, that is, integer data. The processor 120 may perform bootstrapping according to the disclosure for the input ciphertext, and extract, from the finally obtained output ciphertext, the result values corresponding to each bit by decomposing the function evaluation result back into bit units.

In other words, after bootstrapping is completed, the output ciphertext may be decomposed back into bit units, and the above allows for each of the bit ciphertexts to be processed independently. The decomposed bit ciphertexts may indicate result values corresponding to each bit. Accordingly, the processor 120 may extract information of bit unit level and interpret processing results while effectively performing bootstrapping.

Meanwhile, the processor 120 may extract bit values from bit unit ciphertexts using a minimum degree polynomial. When using the minimum degree polynomial, unnecessary calculations may be removed, and operation complexity may be reduced. Then, the processor 120 may effectively perform the overall operation by parallelizing operations using the Paterson-Stockmeyer algorithm for this polynomial.

According to the above-described embodiments with reference to FIG. 4 above, the electronic device 100 may maximize operational efficiency and significantly improve the throughput by processing the ciphertexts in parallel using various schemes.

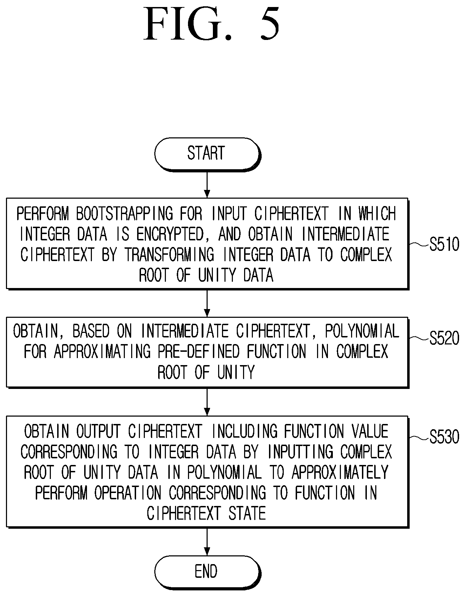

FIG. 5 is a flowchart indicating a controlling method of the electronic device 100 according to an embodiment of the disclosure.

The electronic device 100 may perform bootstrapping for the input ciphertext encrypted with integer data, and obtain the intermediate ciphertext by transforming the integer data to the complex root of unity data (S510).

Specifically, the electronic device 100 may transform the values of slots expressed as the complex vector included in the input ciphertext as the coefficient data indicating the coefficient of the polynomial. The electronic device 100 may raise the modulus of the coefficient data. The electronic device 100 may transform the modulus raised coefficient data to the complex vector. Then, the electronic device 100 may transform the integer data to the complex root of unity data by performing an operation according to the approximate polynomial in the ciphertext state by using the complex vector as an input of the approximate polynomial of the exponential function.

When the intermediate ciphertext is obtained, the electronic device 100 may obtain the polynomial for approximating the pre-defined function in the complex root of unity based on the intermediate ciphertext (S520). When the polynomial is obtained, the electronic device 100 may obtain the output ciphertext including the function value corresponding to the integer data by inputting the complex root of unity data in the polynomial to approximately perform the operation corresponding to the function in the ciphertext state (S530).

According to an embodiment, the electronic device 100 may perform the conjugate complex operation based on the complex root of unity data. The electronic device 100 may reduce the degree of the polynomial by omitting the mutually removable terms according to the symmetrical characteristic of the conjugate complex from among the terms of the polynomial.

According to an embodiment, when the output ciphertext is obtained, the electronic device 100 may reduce errors of the output ciphertext by correcting the function value in the ciphertext state to converge to one function value from among 0 or 1 using the function value included in the output ciphertext as an input of a pre-defined refinement polynomial.

According to an embodiment, the electronic device 100 may obtain the polynomial in which the function value and the derivative value for the function value simultaneously match with the function using the complex root of unity data included in the intermediate ciphertext as an input.

According to an embodiment, the electronic device 100 may divide the polynomial into the plurality of lower degree terms and the plurality of high-order terms using the complex root of unity data included in the intermediate ciphertext as an input. Then, the electronic device 100 may obtain the output ciphertext including the function value by multiplying operation results for the high-order terms after accumulating the operation results for the lower degree terms.

According to an embodiment, the electronic device 100 may adjust, based on the predetermined threshold value indicating the expression range of the integer data, the encryption parameter and the degree of the polynomial used in bootstrapping.

According to an embodiment, the input ciphertext may include a plurality of input ciphertexts. The electronic device 100 may obtain in parallel the plurality of intermediate ciphertexts corresponding respectively to the plurality of input ciphertexts by transforming the integer data included in each of the plurality of input ciphertexts to the complex root of unity data. The electronic device 100 may obtain the plurality of polynomials corresponding to the plurality of intermediate ciphertexts, respectively. Then, the electronic device 100 may obtain the plurality of output ciphertexts corresponding respectively to the plurality of intermediate ciphertexts by applying the plurality of polynomials to the plurality of intermediate ciphertexts.

According to an embodiment, the electronic device 100 may obtain the input ciphertext including the integer data by packing data expressed in bit units to integer units. The electronic device 100 may obtain result values corresponding to each of the plurality of bits by decomposing the function value included in the output ciphertext to bit units.

Meanwhile, the controlling method of the electronic device 100 according to the embodiment described above may be implemented with a program and provided in the electronic device 100. Specifically, the program including the controlling method of the electronic device 100 may be provided stored in a non-transitory computer-readable medium.

Specifically, in terms of a non-transitory computer-readable storage medium including a program that executes the controlling method of the electronic device 100, the controlling method of the electronic device 100 may include a step of performing bootstrapping for the input ciphertext encrypted with integer data, and obtaining the intermediate ciphertext by transforming the integer data to the complex root of unity data, a step of obtaining, based on the intermediate ciphertext, the polynomial for approximating the pre-defined function in the complex root of unity, and a step of obtaining, by inputting the complex root of unity data in the polynomial to approximately perform an operation corresponding to the function in the ciphertext state, the output ciphertext including the function value corresponding to the integer data.

In the above, the controlling method of the electronic device 100, and the computer-readable recording medium including the program that executes the controlling method of the electronic device 100 have been briefly described, but this is merely to omit redundant descriptions thereof, and the various embodiments of the electronic device 100 may also be applied to the controlling method of the electronic device 100, and the computer-readable recording medium including the program that executes the controlling method of the electronic device 100.

A storage medium readable by a device may be provided in a form of a non-transitory storage medium. Herein, the 'non-transitory storage medium' merely means that the device is tangible, and does not include a signal (e.g., electromagnetic waves), and the term does not differentiate data being semi-permanently stored or being temporarily stored in the storage medium. In an example, the 'non-transitory storage medium' may include a buffer in which data is temporarily stored.

According to an embodiment, a method according to the various embodiments described in the disclosure may be provided included a computer program product. The computer program product may be exchanged between a seller and a purchaser as a commodity. The computer program product may be distributed in the form of the machine-readable storage medium (e.g., a compact disc read only memory (CD-ROM)), or distributed online (e.g., downloaded or uploaded) through an application store (e.g., PLAYSTORE^{™}) or directly between two user devices (e.g., smartphones). In the case of online distribution, at least a portion of the computer program product (e.g., downloadable app) may be stored at least temporarily in the machine-readable storage medium such as a server of a manufacturer, a server of an application store, or memory of a relay server, or temporarily generated.

Each of the elements (e.g., a module or a program) according to the various embodiments of the disclosure as described above may be formed as a single entity or a plurality of entities, and a portion of sub-elements of the above-mentioned sub-elements may be omitted, or other sub-elements may be further included in the various embodiments. Alternatively or additionally, a portion of the elements (e.g., modules or programs) may be integrated into one entity to perform the same or similar functions performed by the each of the relevant elements prior to integration.

Operations performed by a module, a program, or another element, in accordance with various embodiments, may be executed sequentially, in a parallel, repetitively, or in a heuristic manner, or at least a portion of the operations may be executed in a different order, omitted or a different operation may be added.

Meanwhile, the term "part" or "module" used in the disclosure may include a unit formed of hardware, software, or firmware, and may be used interchangeably with terms such as, for example, and without limitation, logic, logic blocks, components, circuits, or the like. "Part" or "module" may be a component integrally formed or a minimum unit or a part of the component performing one or more functions. For example, a module may be formed as an application-specific integrated circuit (ASIC).

Various embodiments of the disclosure may be implemented with software including instructions stored in a machine-readable storage media (e.g., computer). The machine may call an instruction stored in the storage medium, and as a device operable according to the called instruction, may include the electronic device (e.g., electronic device 100 (100)) according to the above-mentioned embodiments.

Based on the instruction being executed by the processor 120, the processor 120 may directly or using other elements under the control of the processor 120 perform a function corresponding to the instruction. The instruction may include a code generated by a compiler or executed by an interpreter.

While the disclosure has been illustrated and described above with reference to example embodiments thereof, it will be understood that the above-described specific embodiments are intended to be illustrative, not limiting. It will be understood by those skilled in the art that various changes in form and details may be made therein without departing from the full scope of the disclosure, including the appended claims and their equivalents.

## Claims

1. An electronic device, comprising:
at least one memory storing instructions; and
at least one processor comprising a processing circuit,
wherein the instructions, when executed individually or collectively by the at least one processor, cause the electronic device to:
perform bootstrapping for an input ciphertext resulting from integer data being encrypted, and obtain an intermediate ciphertext by transforming the integer data to complex root of unity data,
obtain, based on the intermediate ciphertext, a polynomial for approximating a pre-defined function in a complex root of unity, and
obtain, by inputting the complex root of unity data in the polynomial to approximately perform an operation corresponding to the pre-defined function in a ciphertext state, an output ciphertext comprising a function value corresponding to the integer data.

2. The electronic device of claim 1, wherein
the input ciphertext, the intermediate ciphertext, and the output ciphertext are encrypted based on a homomorphic encryption scheme for approximately performing an addition and multiplication operation while real data and complex data are encrypted.

3. The electronic device of claim 1, wherein
the instructions, when executed individually or collectively by the at least one processor, cause the electronic device to:
transform values of slots expressed as a complex vector comprised in the input ciphertext to coefficient data indicating a coefficient of the polynomial,
raise a modulus of the coefficient data,
transform the modulus raised coefficient data to the complex vector, and
transform the integer data to the complex root of unity data by performing an operation according to an approximate polynomial in the ciphertext state by using the complex vector as an input of the approximate polynomial of an exponential function.

4. The electronic device of claim 1, wherein
the instructions, when executed individually or collectively by the at least one processor, cause the electronic device to:
obtain the output ciphertext by performing an operation for each term of the polynomial in the ciphertext state by using the complex root of unity data comprised in the intermediate ciphertext as an input of the polynomial.

5. The electronic device of claim 4, wherein
the instructions, when executed individually or collectively by the at least one processor, cause the electronic device to:
perform a conjugate complex operation based on the complex root of unity data, and
reduce a degree of the polynomial by omitting mutually removable terms according to a symmetrical characteristic of a conjugate complex from among the terms of the polynomial.

6. The electronic device of claim 1, wherein
the instructions, when executed individually or collectively by the at least one processor, cause the electronic device to:
reduce, based on the output ciphertext being obtained, errors of the output ciphertext by correcting the function value in the ciphertext state to converge to one function value from among 0 or 1 using the function value comprised in the output ciphertext as an input of a pre-defined refinement polynomial.

7. The electronic device of claim 6, wherein
the instructions, when executed individually or collectively by the at least one processor, cause the electronic device to:
obtain the polynomial in which the function value and a derivative value for the function value simultaneously match with the function using the complex root of unity data comprised in the intermediate ciphertext as an input.

8. The electronic device of claim 1, wherein
the instructions, when executed individually or collectively by the at least one processor, cause the electronic device to:
divide the polynomial into a plurality of lower degree terms and a plurality of high-order terms by using the complex root of unity data comprised in the intermediate ciphertext as an input, and
obtain the output ciphertext comprising the function value by multiplying an operation result for the high-order terms after accumulating operation results for the lower degree terms.

9. The electronic device of claim 1, wherein
the input ciphertext comprises a plurality of input ciphertexts, and
the instructions, when executed individually or collectively by the at least one processor, cause the electronic device to:
obtain in parallel a plurality of intermediate ciphertexts corresponding respectively to the plurality of input ciphertexts by transforming the integer data comprised in each of the plurality of input ciphertexts to the complex root of unity data,
obtain a plurality of polynomials corresponding respectively to the plurality of intermediate ciphertexts, and
obtain a plurality of output ciphertexts corresponding respectively to the plurality of intermediate ciphertexts by applying the plurality of polynomials to the plurality of intermediate ciphertexts.

10. The electronic device of claim 1, wherein
the instructions, when executed individually or collectively by the at least one processor, cause the electronic device to:
obtain the input ciphertext comprising the integer data by packing data expressed in bit units into integer units, and
obtain result values corresponding respectively to a plurality of bits by dividing the function value comprised in the output ciphertext into the bit units.

11. The electronic device of claim 1, wherein
the input ciphertext consists of vectors comprising integer data in each of a plurality of slots, and
the instructions, when executed individually or collectively by the at least one processor, cause the electronic device to:
transform the integer data comprised in each of the plurality of slots to the complex root of unity data respectively, and
obtain, by applying the polynomial to each of the complex root of unity data, the output ciphertext comprising all of a plurality of output data comprising function values corresponding respectively to the plurality of slots.

12. The electronic device of claim 1, wherein
the instructions, when executed individually or collectively by the at least one processor, cause the electronic device to:
adjust, based on a predetermined threshold value indicating an expression range of the integer data, an encryption parameter and a degree of the polynomial used in the bootstrapping.

13. A controlling method of an electronic device, the method comprising:
performing bootstrapping for an input ciphertext resulting from integer data being encrypted, and obtaining an intermediate ciphertext by transforming the integer data to complex root of unity data;
obtaining, based on the intermediate ciphertext, a polynomial for approximating a pre-defined function in a complex root of unity; and
obtaining, by inputting the complex root of unity data in the polynomial to approximately perform an operation corresponding to the pre-defined function in a ciphertext state, an output ciphertext comprising a function value corresponding to the integer data.

14. A non-transitory computer-readable recording medium comprising a program for executing a controlling method of an electronic device, wherein the controlling method of the electronic device comprises:
performing bootstrapping for an input ciphertext resulting form integer data being encrypted, and obtaining an intermediate ciphertext by transforming the integer data to complex root of unity data;
obtaining, based on the intermediate ciphertext, a polynomial for approximating a pre-defined function in a complex root of unity; and
obtaining, by inputting the complex root of unity data in the polynomial to approximately perform an operation corresponding to the pre-defined function in a ciphertext state, an output ciphertext comprising a function value corresponding to the integer data.

## Patentansprüche

1. Elektronische Vorrichtung, umfassend: mindestens einen Speicher, der Anweisungen speichert; und mindestens einen Prozessor, der eine Verarbeitungsschaltung umfasst, wobei die Anweisungen, wenn sie einzeln oder gemeinsam durch den mindestens einen Prozessor ausgeführt werden, die elektronische Vorrichtung zu Folgendem veranlassen: Durchführen von Bootstrapping für einen eingegebenen Chiffretext, der sich aus verschlüsselten ganzzahligen Daten ergibt, und Erhalten eines Zwischenchiffretexts durch Transformieren der ganzzahligen Daten in komplexe Einheitswurzeldaten, Erhalten, basierend auf dem Zwischenchiffretext, eines Polynoms zum Approximieren einer vordefinierten Funktion in einer komplexen Einheitswurzel, und Erhalten, durch Eingeben der komplexen Einheitswurzeldaten in das Polynom, um näherungsweise eine Operation durchzuführen, die der vordefinierten Funktion in einem Chiffretextzustand entspricht, eines Ausgabechiffretexts, der einen Funktionswert umfasst, der den ganzzahligen Daten entspricht.

2. Elektronische Vorrichtung nach Anspruch 1, wobei der eingegebene Chiffretext, der Zwischenchiffretext und der Ausgabechiffretext auf Grundlage eines homomorphen Verschlüsselungsschemas zum näherungsweisen Durchführen einer Additions- und Multiplikationsoperation verschlüsselt sind, während reelle Daten und komplexe Daten verschlüsselt sind.

3. Elektronische Vorrichtung nach Anspruch 1, wobei die Anweisungen, wenn sie einzeln oder gemeinsam durch den mindestens einen Prozessor ausgeführt werden, die elektronische Vorrichtung zu Folgendem veranlassen: Transformieren von Werten von Slots, die als ein komplexer Vektor ausgedrückt werden, der in dem eingegebenen Chiffretext enthalten ist, in Koeffizientendaten, die einen Koeffizienten des Polynoms angeben, Erhöhen eines Moduls der Koeffizientendaten, Transformieren der modulerhöhten Koeffizientendaten in den komplexen Vektor und Transformieren der ganzzahligen Daten in die komplexen Einheitswurzeldaten durch Durchführen einer Operation gemäß einem Näherungspolynom in dem Chiffretextzustand unter Verwendung des komplexen Vektors als eine Eingabe des Näherungspolynoms einer Exponentialfunktion.

4. Elektronische Vorrichtung nach Anspruch 1, wobei die Anweisungen, wenn sie einzeln oder gemeinsam durch den mindestens einen Prozessor ausgeführt werden, die elektronische Vorrichtung zu Folgendem veranlassen: Erhalten des Ausgabechiffretexts durch Durchführen einer Operation für jeden Term des Polynoms im Chiffretextzustand durch Verwenden der komplexen Einheitswurzeldaten, die in dem Zwischenchiffretext enthalten sind, als eine Eingabe des Polynoms.

5. Elektronische Vorrichtung nach Anspruch 4, wobei die Anweisungen, wenn sie einzeln oder gemeinsam durch den mindestens einen Prozessor ausgeführt werden, die elektronische Vorrichtung zu Folgendem veranlassen: Durchführen einer konjugiert komplexen Operation auf Grundlage der komplexen Einheitswurzeldaten und Reduzieren eines Grads des Polynoms durch Weglassen gegenseitig entfernbarer Terme gemäß einer symmetrischen Eigenschaft eines konjugiert Komplexen unter den Termen des Polynoms.

6. Elektronische Vorrichtung nach Anspruch 1, wobei die Anweisungen, wenn sie einzeln oder gemeinsam durch den mindestens einen Prozessor ausgeführt werden, die elektronische Vorrichtung zu Folgendem veranlassen: Reduzieren, basierend auf dem erhaltenen Ausgabechiffretext, von Fehlern des Ausgabechiffretexts durch Korrigieren des Funktionswerts in dem Chiffretextzustand, um zu einem Funktionswert aus 0 oder 1 zu konvergieren, unter Verwendung des Funktionswerts, der in dem Ausgabechiffretext enthalten ist, als eine Eingabe eines vordefinierten Verfeinerungspolynoms.

7. Elektronische Vorrichtung nach Anspruch 6, wobei die Anweisungen, wenn sie einzeln oder gemeinsam durch den mindestens einen Prozessor ausgeführt werden, die elektronische Vorrichtung zu Folgendem veranlassen: Erhalten des Polynoms, in dem der Funktionswert und ein Ableitungswert für den Funktionswert gleichzeitig mit der Funktion übereinstimmen, unter Verwendung der komplexen Einheitswurzeldaten, die in dem Zwischenchiffretext enthalten sind, als eine Eingabe.

8. Elektronische Vorrichtung nach Anspruch 1, wobei die Anweisungen, wenn sie einzeln oder gemeinsam durch den mindestens einen Prozessor ausgeführt werden, die elektronische Vorrichtung zu Folgendem veranlassen: Teilen des Polynoms in eine Vielzahl von Termen niedrigeren Grades und eine Vielzahl von Termen höherer Ordnung durch Verwenden der komplexen Einheitswurzeldaten, die in dem Zwischenchiffretext enthalten sind, als eine Eingabe, und Erhalten des Ausgabechiffretexts, der den Funktionswert umfasst, durch Multiplizieren eines Operationsergebnisses für die Terme höherer Ordnung nach dem Akkumulieren von Operationsergebnissen für die Terme niedrigeren Grades.

9. Elektronische Vorrichtung nach Anspruch 1, wobei der eingegebene Chiffretext eine Vielzahl von eingegebenen Chiffretexten umfasst und die Anweisungen, wenn sie einzeln oder gemeinsam durch den mindestens einen Prozessor ausgeführt werden, die elektronische Vorrichtung zu Folgendem veranlassen: Paralleles Erhalten einer Vielzahl von Zwischenchiffretexten, die jeweils der Vielzahl von eingegebenen Chiffretexten entsprechen, durch Transformieren der in jedem der Vielzahl von eingegebenen Chiffretexten enthaltenen ganzzahligen Daten in die komplexen Einheitswurzeldaten, Erhalten einer Vielzahl von Polynomen, die jeweils der Vielzahl von Zwischenchiffretexten entsprechen, und Erhalten einer Vielzahl von Ausgabechiffretexten, die jeweils der Vielzahl von Zwischenchiffretexten entsprechen, durch Anwenden der Vielzahl von Polynomen auf die Vielzahl von Zwischenchiffretexten.

10. Elektronische Vorrichtung nach Anspruch 1, wobei die Anweisungen, wenn sie einzeln oder gemeinsam durch den mindestens einen Prozessor ausgeführt werden, die elektronische Vorrichtung zu Folgendem veranlassen: Erhalten des eingegebenen Chiffretexts, der die ganzzahligen Daten umfasst, indem Daten, die in Bit-Einheiten ausgedrückt werden, in ganzzahlige Einheiten gepackt werden, und Erhalten von Ergebniswerten, die jeweils einer Vielzahl von Bits entsprechen, indem der Funktionswert, der in dem Ausgabechiffretext enthalten ist, in die Bit-Einheiten unterteilt wird.

11. Elektronische Vorrichtung nach Anspruch 1, wobei der eingegebene Chiffretext aus Vektoren besteht, die ganzzahlige Daten in jedem einer Vielzahl von Slots umfassen, und die Anweisungen, wenn sie einzeln oder gemeinsam durch den mindestens einen Prozessor ausgeführt werden, die elektronische Vorrichtung zu Folgendem veranlassen: Transformieren der ganzzahligen Daten, die in jedem der Vielzahl von Slots enthalten sind, in die komplexen Einheitswurzeldaten jeweils und Erhalten, durch Anwenden des Polynoms auf jedes der komplexen Einheitswurzeldaten, des Ausgabechiffretexts, der sämtliche einer Vielzahl von Ausgabedaten umfasst, die Funktionswerte umfassen, die jeweils der Vielzahl von Slots entsprechen.

12. Elektronische Vorrichtung nach Anspruch 1, wobei die Anweisungen, wenn sie einzeln oder gemeinsam durch den mindestens einen Prozessor ausgeführt werden, die elektronische Vorrichtung zu Folgendem veranlassen: Einstellen eines Verschlüsselungsparameters und eines Grads des beim Bootstrapping verwendeten Polynoms auf Grundlage eines vorbestimmten Schwellenwerts, der einen Ausdrucksbereich der ganzzahligen Daten angibt.

13. Steuerverfahren einer elektronischen Vorrichtung, wobei das Verfahren Folgendes umfasst: Durchführen von Bootstrapping für einen eingegebenen Chiffretext, der sich aus verschlüsselten ganzzahligen Daten ergibt, und Erhalten eines Zwischenchiffretextes durch Transformieren der ganzzahligen Daten in komplexe Einheitswurzeldaten; Erhalten, basierend auf dem Zwischenchiffretext, eines Polynoms zum Approximieren einer vordefinierten Funktion in einer komplexen Einheitswurzel; und Erhalten, durch Eingeben der komplexen Einheitswurzeldaten in das Polynom, um näherungsweise eine Operation durchzuführen, die der vordefinierten Funktion in einem Chiffretextzustand entspricht, eines Ausgabechiffretextes, der einen Funktionswert umfasst, der den ganzzahligen Daten entspricht.

14. Nicht-transitorisches computerlesbares Aufzeichnungsmedium, das ein Programm zum Ausführen eines Steuerverfahrens einer elektronischen Vorrichtung umfasst, wobei das Steuerverfahren der elektronischen Vorrichtung Folgendes umfasst: Durchführen von Bootstrapping für einen eingegebenen Chiffretext, der sich aus verschlüsselten ganzzahligen Daten ergibt, und Erhalten eines Zwischenchiffretexts durch Transformieren der ganzzahligen Daten in komplexe Einheitswurzeldaten; Erhalten eines Polynoms basierend auf dem Zwischenchiffretext zum Approximieren einer vordefinierten Funktion in einer komplexen Einheitswurzel; und Erhalten eines Ausgabechiffretexts, der einen Funktionswert umfasst, der den ganzzahligen Daten entspricht, durch Eingeben der komplexen Einheitswurzeldaten in das Polynom, um näherungsweise eine Operation durchzuführen, die der vordefinierten Funktion in einem Chiffretextzustand entspricht.

## Revendications

1. Dispositif électronique, comprenant : au moins une mémoire stockant des instructions ; et au moins un processeur comprenant un circuit de traitement, dans lequel les instructions, lorsqu'elles sont exécutées individuellement ou collectivement par l'au moins un processeur, amènent le dispositif électronique à : effectuer un amorçage pour un texte chiffré d'entrée résultant de données entières chiffrées, et obtenir un texte chiffré intermédiaire en transformant les données entières en données de racine complexe de l'unité, obtenir, sur la base du texte chiffré intermédiaire, un polynôme pour approximer une fonction prédéfinie dans une racine complexe de l'unité, et obtenir, en entrant les données de racine complexe de l'unité dans le polynôme pour effectuer approximativement une opération correspondant à la fonction prédéfinie dans un état de texte chiffré, un texte chiffré de sortie comprenant une valeur de fonction correspondant aux données entières.

2. Dispositif électronique selon la revendication 1, dans lequel le texte chiffré d'entrée, le texte chiffré intermédiaire et le texte chiffré de sortie sont chiffrés sur la base d'un schéma de chiffrement homomorphe pour effectuer approximativement une opération d'addition et de multiplication tandis que des données réelles et des données complexes sont chiffrées.

3. Dispositif électronique selon la revendication 1, dans lequel les instructions, lorsqu'elles sont exécutées individuellement ou collectivement par l'au moins un processeur, amènent le dispositif électronique à :
transformer des valeurs de créneaux exprimées en tant que vecteur complexe compris dans le texte chiffré d'entrée en données de coefficient indiquant un coefficient du polynôme, élever un module des données de coefficient, transformer les données de coefficient à module élevé en vecteur complexe, et transformer les données entières en données de racine complexe de l'unité en effectuant une opération selon un polynôme approché dans l'état de texte chiffré en utilisant le vecteur complexe comme entrée du polynôme approché d'une fonction exponentielle.

4. Dispositif électronique selon la revendication 1, dans lequel les instructions, lorsqu'elles sont exécutées individuellement ou collectivement par l'au moins un processeur, amènent le dispositif électronique à :
obtenir le texte chiffré de sortie en effectuant une opération pour chaque terme du polynôme dans l'état de texte chiffré en utilisant les données de racine complexe de l'unité comprises dans le texte chiffré intermédiaire en tant qu'entrée du polynôme.

5. Dispositif électronique selon la revendication 4, dans lequel les instructions, lorsqu'elles sont exécutées individuellement ou collectivement par l'au moins un processeur, amènent le dispositif électronique à :
effectuer une opération complexe conjuguée basée sur les données de racine complexe de l'unité, et réduire un degré du polynôme en omettant des termes mutuellement supprimables selon une caractéristique symétrique d'un complexe conjugué parmi les termes du polynôme.

6. Dispositif électronique selon la revendication 1, dans lequel les instructions, lorsqu'elles sont exécutées individuellement ou collectivement par l'au moins un processeur, amènent le dispositif électronique à :
réduire, sur la base du texte chiffré de sortie obtenu, les erreurs du texte chiffré de sortie en corrigeant la valeur de fonction dans l'état de texte chiffré pour converger vers une valeur de fonction parmi 0 ou 1 en utilisant la valeur de fonction comprise dans le texte chiffré de sortie comme entrée d'un polynôme de raffinement prédéfini.

7. Dispositif électronique selon la revendication 6, dans lequel les instructions, lorsqu'elles sont exécutées individuellement ou collectivement par l'au moins un processeur, amènent le dispositif électronique à :
obtenir le polynôme dans lequel la valeur de fonction et une valeur dérivée pour la valeur de fonction correspondent simultanément à la fonction en utilisant les données de racine complexe de l'unité comprises dans le texte chiffré intermédiaire comme entrée.

8. Dispositif électronique selon la revendication 1, dans lequel les instructions, lorsqu'elles sont exécutées individuellement ou collectivement par l'au moins un processeur, amènent le dispositif électronique à :
diviser le polynôme en une pluralité de termes de degré inférieur et une pluralité de termes d'ordre supérieur en utilisant les données de racine complexe de l'unité comprises dans le texte chiffré intermédiaire comme entrée, et
obtenir le texte chiffré de sortie comprenant la valeur de fonction en multipliant un résultat d'opération pour les termes d'ordre supérieur après avoir accumulé des résultats d'opération pour les termes de degré inférieur.

9. Dispositif électronique selon la revendication 1, dans lequel le texte chiffré d'entrée comprend une pluralité de textes chiffrés d'entrée, et les instructions, lorsqu'elles sont exécutées individuellement ou collectivement par l'au moins un processeur, amènent le dispositif électronique à :
obtenir en parallèle une pluralité de textes chiffrés intermédiaires correspondant respectivement à la pluralité de textes chiffrés d'entrée en transformant les données entières comprises dans chacun de la pluralité de textes chiffrés d'entrée en données de racine complexe de l'unité, obtenir une pluralité de polynômes correspondant respectivement à la pluralité de textes chiffrés intermédiaires, et obtenir une pluralité de textes chiffrés de sortie correspondant respectivement à la pluralité de textes chiffrés intermédiaires en appliquant la pluralité de polynômes à la pluralité de textes chiffrés intermédiaires.

10. Dispositif électronique selon la revendication 1, dans lequel les instructions, lorsqu'elles sont exécutées individuellement ou collectivement par l'au moins un processeur, amènent le dispositif électronique à :
obtenir le texte chiffré d'entrée comprenant les données entières en regroupant les données exprimées en unités de bits en unités entières, et obtenir des valeurs de résultat correspondant respectivement à une pluralité de bits en divisant la valeur de fonction comprise dans le texte chiffré de sortie en unités de bits.

11. Dispositif électronique selon la revendication 1, dans lequel le texte chiffré d'entrée consiste en des vecteurs comprenant des données entières dans chacun d'une pluralité de créneaux, et
les instructions, lorsqu'elles sont exécutées individuellement ou collectivement par l'au moins un processeur, amènent le dispositif électronique à :
transformer les données entières comprises dans chacun de la pluralité de créneaux respectivement en données de racine complexe de l'unité, et obtenir, en appliquant le polynôme à chacune des données de racine complexe de l'unité, le texte chiffré de sortie comprenant la totalité d'une pluralité de données de sortie comprenant des valeurs de fonction correspondant respectivement à la pluralité de créneaux.

12. Dispositif électronique selon la revendication 1, dans lequel les instructions, lorsqu'elles sont exécutées individuellement ou collectivement par l'au moins un processeur, amènent le dispositif électronique à :
ajuster, sur la base d'une valeur de seuil prédéterminée indiquant une plage d'expression des données entières, un paramètre de chiffrement et un degré du polynôme utilisé dans l'amorçage.

13. Procédé de commande d'un dispositif électronique, le procédé comprenant :
la réalisation d'un amorçage pour un texte chiffré d'entrée résultant de données entières chiffrées, et l'obtention d'un texte chiffré intermédiaire par transformation des données entières en données de racine complexe de l'unité ; l'obtention, sur la base du texte chiffré intermédiaire, d'un polynôme pour approximer une fonction prédéfinie dans une racine complexe de l'unité ; et l'obtention, par entrée des données de racine complexe de l'unité dans le polynôme pour effectuer approximativement une opération correspondant à la fonction prédéfinie dans un état de texte chiffré, d'un texte chiffré de sortie comprenant une valeur de fonction correspondant aux données entières.

14. Support d'enregistrement lisible par ordinateur non transitoire comprenant un programme pour exécuter un procédé de commande d'un dispositif électronique, dans lequel le procédé de commande du dispositif électronique comprend :
la réalisation d'un amorçage pour un texte chiffré d'entrée résultant de données entières chiffrées, et l'obtention d'un texte chiffré intermédiaire en transformant les données entières en données de racine complexe de l'unité ; l'obtention, sur la base du texte chiffré intermédiaire, d'un polynôme pour approximer une fonction prédéfinie dans une racine complexe de l'unité ; et
l'obtention, en entrant les données de racine complexe de l'unité dans le polynôme pour effectuer approximativement une opération correspondant à la fonction prédéfinie dans un état de texte chiffré, d'un texte chiffré de sortie comprenant une valeur de fonction correspondant aux données entières.
